Europäisches Patentamt

European Patent Office

Office européen des brevets

(19)

(11) **EP 1 326 805 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(21) Anmeldenummer: **01985695.4**

(22) Anmeldetag: **27.09.2001**

(51) Int Cl.7: **C02F 1/467**

(86) Internationale Anmeldenummer:
**PCT/EP2001/011287**

(87) Internationale Veröffentlichungsnummer:
**WO 2002/026636 (04.04.2002 Gazette 2002/14)**

(54) **VERFAHREN ZUR ELEKTROLYTISCHEN DESINFEKTION VON TRINKWASSER UNTER VERMEIDUNG KATODISCHER WASSERSTOFFENTWICKLUNG**

PROCESS FOR ELECTROLYTIC DISINFECTION OF DRINKING WATER WITHOUT CATHODIC HYDROGEN EVOLUTION

PROCEDE POUR DESINFECTER DE L'EAU POTABLE PAR ELECTROLYSE SANS FORMATION CATHODIQUE D'HYDROGENE

(84) Benannte Vertragsstaaten:
**AT BE CH CY DE DK ES FI FR GB GR IE IT LI LU MC NL PT SE TR**

(30) Priorität: **29.09.2000 DE 10048299**

(43) Veröffentlichungstag der Anmeldung:
**16.07.2003 Patentblatt 2003/29**

(73) Patentinhaber: **AQUA Rotter GmbH**
**14974 Ludwigsfelde (DE)**

(72) Erfinder:
 • **WÜNSCHE, Maja**
  **10409 Berlin (DE)**
 • **KRAFT, Alexander**
  **12577 Berlin (DE)**
 • **KIRSTEIN, Wolfgang**
  **14974 Ludwigsfelde (DE)**
 • **BLASCHKE, Manfred**
  **10437 Berlin (DE)**
 • **PETZER, Helmut**
  **16552 Schildow (DE)**

(74) Vertreter: **Pfenning, Meinig & Partner GbR**
**Joachimstaler Strasse 10-12**
**10719 Berlin (DE)**

(56) Entgegenhaltungen:
**EP-A- 0 357 077        EP-A- 0 410 946**
**EP-A- 0 994 074        US-A- 4 722 773**
**US-A- 5 637 206        US-A- 6 113 773**

 • **PATENT ABSTRACTS OF JAPAN vol. 1999, no. 10, 31. August 1999 (1999-08-31) & JP 11 140679 A (PERMELEC ELECTRODE LTD), 25. Mai 1999 (1999-05-25) & US 6 159 349 A (SHUHEI WAKITA ET AL.) 12. Dezember 2000 (2000-12-12)**
 • **PATENT ABSTRACTS OF JAPAN vol. 1996, no. 09, 30. September 1996 (1996-09-30) & JP 08 134676 A (TSURUMI SODA CO LTD), 28. Mai 1996 (1996-05-28)**
 • **PATENT ABSTRACTS OF JAPAN vol. 006, no. 035 (C-093), 3. März 1982 (1982-03-03) & JP 56 152979 A (TOYO SODA MFG CO LTD), 26. November 1981 (1981-11-26)**

**Beschreibung**

Die Erfindung bezieht sich auf ein Verfahren zur elektrolytischen Wasserdesinfektion von Trink wasser durch anodisch erzeugte Desinfizienzien, wobei erstmals die unerwünschte Bildung von Wasserstoff bei der katodischen Teilreaktion vermieden wird.

Die elektrolytische Wasserdesinfektion ist eine effiziente und kostengünstige Methode der Wasserdesinfektion. Sie kann in etwa wie folgt definiert werden: Abtötung von Mikroorganismen im zu behandelnden Wasser durch Einwirkung eines über Elektroden in das Wasser eingebrachten elektrischen Stromes. Dieser elektrische Strom kann sowohl zur anodischen Erzeugung von desinfizierend wirkenden Stoffen aus dem Wasser selbst oder aus in ihm gelösten Substanzen führen, als auch zur direkten Abtötung der Mikroorganismen bei Kontakt zu den Elektroden sowie durch Verschiebungen des pH-Wertes in Elektrodennähe.

Die wichtigsten Anodenreaktionen mit denen oxidierend und desinfizierend wirkende Stoffe (z.B. Unterchlorige Säure HClO, Peroxodisulfiat $S_2O_8^{2-}$, Wasserstoffperoxyd $H_2O_2$, Ozon $O_3$, Permangant $MnO_4^-$) aus dem Wasser und seinen natürlichen Wasserinhaltsstoffen erzeugt werden, sind die folgenden:

$$2\,Cl^- \rightarrow Cl_2 + 2\,e^- \tag{1a}$$

$$Cl_2 + H_2O \rightarrow HClO + HCl \tag{1b}$$

$$2\,HSO_4^- \rightarrow S_2O_8^{2-} + 2\,H^+ + 2\,e^- \tag{2}$$

$$2\,H_2O \rightarrow H_2O_2 + 2\,H^+ + 2\,e^- \tag{3}$$

$$3\,H_2O \rightarrow O_3 + 6\,e^- + 6\,H^+ \tag{4}$$

$$Mn^{2+} + 4\,H_2O \rightarrow MnO_4^- + 8\,H^+ + 5e^- \tag{5}$$

In der Regel ist die aus dem natürlichen Chloridgehalt des Wassers nach Gleichung 1a und 1b erzeugte Unterchlorige Säure (auch als sogenanntes "Freies Chlor" bezelchnet) das mit Abstand wichtigste Desinfektionsmittel der elektrolytischen Wasserclesinfektion.

Zusätzlich zu den Reaktionen nach Gleichung 1 bis 5 findet als Anodenreaktion die Sauerstoffentwicklung, in der Regel in großem Überschuss, statt.

$$2\,H_2O \rightarrow O_2 + 4\,H^+ + 4\,e^- \tag{6}$$

Neben den Bezeichnungen elektrochemische bzw. elektrolytische Wasserdesinfektion werden oft auch andere Namen wie die etwas irreführenden Bezeichnungen Anodische Oxidation oder Schwachstrom-Elektrolyse verwendet.

Nach dem Stand der Technik sind eine Vielzahl von Vorrichtungen zur elelctrolytischen Wasserdesinfektion bekannt (z.B. die Druckschriften DE3430616, EP515628, US5807473, EP711730, DE19634736, WO97/11908, DE19633342), die jedoch alle den entscheidenden Nachteil aufweisen, dass an den Katoden bei der elektrolytischen Behandlung des zu desinfizierenden Wassers Wasserstoff nach

$$2\,H_2O + 2\,e^- \rightarrow H_2 + 2\,OH^- \tag{7}$$

entsteht. Wenn die Katodenreaktion zu 100% als Wasserstoffentwicklung verläuft, werden pro Ah etwa 0,4 l Wasserstoff gebildet. Insbesondere in Zusammenwirkung mit an der Anode bei der Elektrolyse nach Gleichung (6) entstandenem Sauerstoff kann der Wasserstoff zur Bildung einer gefährlichen explosiven Knallgasmischung führen. Des weiteren kann die Ansammlung größerer Wasserstoffmengen in Rohrleitungssystemen in denen Wasser zirkuliert zum Abreißen der Wasserzirkulation führen. Wasserstoff kann in viele Metalle eindringen und zu spezifischen Formen der Korrosion oder Versprödung führen. Aus diesen Gründen ist die unerwünschte Bildung von Wasserstoff bis zum heutigen Tag die wichtigste Ursache dafür, dass sich die Methode der elektrolytischen Wasserdesinfektion nicht in größerem Umfang auf dem Markt durchsetzen konnte.

In DE19631842 wird der Einsatz einer Sauerstoffverzehrkatode zur elektrolytischen Behandlung von Trink- und Brauchwasser vorgeschlagen. An einer Sauerstoffverzehrkatode kann Sauerstoff zu Wasserstoffperoxyd und Hydroxylionen nach Gleichung (8) oder nur zu Hydroxylionen nach Gleichung (9) reduziert werden.

$$O_2 + 2\,H_2O + 2\,e^- \rightarrow H_2O_2 + 2\,OH^- \qquad\qquad (8)$$

$$O_2 + 2\,H_2O + 4\,e^- \rightarrow 4\,OH^- \qquad\qquad (9)$$

Der Einsatz einer solchen Elektrode führt tatsächlich zur Vermeidung der katodischen Wasserstoffbildung, wenn ausreichend Sauerstoff zur Verfügung steht, um die Reaktion der Sauerstoffreduktion in gewünschtem Umfang ablaufen lassen zu können. Außerdem kann nun auch bei der kathodischen Reaktion ein Desinfektionsmittel gebildet werden, was die Effizienz des Verfahrens gegebenenfalls verbessert. Allerdings hat das Wasserstoffperoxyd ein geringeres Oxidationspotential im Vergleich zu den meisten der an der Anode gebildeten Stoffe nach Gleichung 1 bis 5 und führt deshalb oft nur zu unbefriedigenden Ergebnissen. Auch ist Wasserstoffperoxyd nicht in jedem Fall als Desinfektionsmittel zugelassen. So darf es z.B. in Deutschland nicht zur Desinfektion von Trinkwasser verwendet werden. Nachteilig ist auch, dass das an der Sauerstoffverzehrkatode gebildete Wasserstoffperoxyd mit dem anodisch gebildeten freiem Chlor nach

$$H_2O_2 + HC10 \rightarrow H_2O + HCl + O_2 \qquad\qquad (10)$$

reagieren kann, wodurch es zur Eliminierung des wichtigsten anodisch gebildeten Desinfektionsmittels, des Freien Chlors kommen kann. Ein weiterer Nachteil von Sauerstoffverzehrkatoden des Typs, wie sie in DE19631842 angegeben sind, ist die Tatsache, dass nur der im Wasser gelöste Sauerstoff für die Reaktionen gemäß Gleichung 8 und 9 genutzt werden kann. Die Löslichkeit des Sauerstoffs in Wasser ist jedoch recht gering und beträgt bei atmosphärischem Druck typischerweise maximal 8 bis 10 mg/1. Auch wenn reiner Sauerstoff aus einer Gasflasche oder der anodisch gebildete Sauerstoff zur Sauerstoffsättigung des Wassers verwendet werden, erreicht man lediglich Werte unterhalb 25 mg/l. Daher sind die möglichen Reaktionsgeschwindigkeiten und daraus folgend die anwendbaren Stromdichten sehr gering, wenn man nicht doch die kathodische Bildung von Wasserstoff in Kauf nehmen will. Deshalb konnten sich auch elektrolytische Vorrichtungen zur Wasserdesinfektionen mit Sauerstoffverzehrkatoden nach DE19632842 nicht in größerem Umfang in der Praxis durchsetzen.

Die EP-A-O 410 946 beschreibt ein Verfahren zum Entfernen einer organischen Verbindung aus einer wässerigen Lösung. Hierbei wird von außen Sauerstoff über eine Gasdiffusionselektrode zugeführt und dieser Sauerstoff bewirkt an der Elektrode bei Anwesenheit eines geeigneten Katalysators durch Oxidation die Zersetzung der organischen Verbindung. Wird das Verfahren als Elektrolyseverfahren durchgeführt, dann bildet die Gasdiffusionselektrode die Kathode.

Die EP-A-0 357 077 zeigt den Aufbau einer Gasdiffusionselektrode insbesondere für Brennstoffzellen oder Ozongeneratoren. Diese Elektrode weist eine elektrisch leitende gasdurchlässige und hydrophobe Stützschicht aus einer gleichförmigen Mischung aus Kohlenstoffteilchen und hydrophobem Polymer sowie eine aktive, elektrolytendurchlässige Schicht aus halogeniertem Polymerbinder mit darin fein verteilten Platinteilchen als Katalysator auf.

Schließlich offenbart die US-A-4 722 773 eine elektrochemische Zelle mit einer Gasdiffusionselektrode aus einer elektrisch leitenden, porösen und hydrophilen Schicht aus leitendem Kohlenstoff und einem polymeren Binder sowie einer porösen, hydrophoben Schicht aus einem Polymer.

Der Erfindung liegt daher die Aufgabe zugrunde, ein gegenüber dem Stand der Technik wesentlich verbessertes elektrochemisches Verfahren anzugeben, mit dem die elektrolytische Desinfektion von Trinkwasser durch anodisch erzeugte Desinfizienzien unter Vermeidung von kathodischer Wasserstoffentwicklung schnell, zuverlässig und kostengünstig durchgeführt werden kann.

Erfindungsgemäß wird die Aufgabe dadurch gelöst, dass als Katode eine Sauerstoffverzehrkathode in Form einer Gasdiffusionselektrode verwendet wird, die mit Sauerstoff oder mit einem Sauerstoff enthaltenden Gas in Kontakt gebracht wird und die eine Wasserstoffperoxidbildung unterbindende Katalysatoren aufweist, und dass als Anode eine bordotierte Diamantelektrode verwendet wird.

Bordotierte Diamantelektroden sind insbesondere dann geeignet, wenn der natürliche Chlorid gehalt des zu desinfizierenden Trinkwassers sehr gering ist und andere desinfizierend wirkende Stoffe wie beispielsweise Ozon, Peroxidisulfat und insbesondere OH-Radikale möglichst effektiv erzeugt werden sollen.

Bei diesen Gasdifiusionselektroden diffundiert Sauerstoff aus der Umgebungsluft durch eine wasserundurchlässige aber sauerstoffdurchlässige Membran hindurch in ein poröses Elektrodenmaterial ein. In diesem porösen Elektrodenmaterial, welches auch vom Elektrolyten, also dem zu desinfizierenden Wasser durchdrungen ist, wird der Sauerstoff dann zu Hydroxylionen was zu einem alkalischen pH-Wert In unmittelbarer Nähe der als Katode geschalteten Gasdiffusionselektrode führt.

In einer Ausführung besteht die Gasdiffusionselektrode aus einem wasserundurchlässigen aber sauerstoffdurchlässigen Teflonfilm, einer als poröse Elektrode dienenden Kohleschicht und einem Metalldrahtnetz oder Streckmetall, welches zur Stromzuführung und zur mechanischen Stabilisierung der Elektrode dient.

Nach einem weiteren Merkmal besteht das Metalldrahtnetz oder Streckmetall aus Titan oder einem anderen Ventilmetall, da diese eine besonders hohe elelctrochemische Stabilität aufweisen.

Da die Wasserstoffperoxydbildung nicht erwünscht.ist, wie zum Beispiel bei der Desinfektion von Trinkwasser, kann die katodische Bildung von Wasserstoffperoxyd an der Sauerstoffverzehrkatode dadurch vermieden werden, dass die Kohleschicht platiniert wird. In einer weiteren Ausführung kann zu diesem Zweck anstatt des Platins auf die Kohleschicht das Oxid eines Elementes der Platinmetallgruppe,vorzugsweise Iridium- oder Rutheniumoxid auf die Kohleschicht oder/und auf das Metalldrahtnetz oder Streckmetall aufgebracht werden.

Wenn Wasser unter höheren Drücken, wie sie beispielsweise in der Hauswasserversorgung üblich sind, durch elektrolytische Wasserdesinfektion behandelt werden soll, müssen auch die verwendeten Elektroden diesen Drücken dauerhaft standhalten. Zu diesem Zureck wird die Gasdiffusionselektrode zusätzlich von außen mechanisch gestützt, um auch Wasser unter höheren Drücken elektrolytisch behandeln zu können.

Durch die nicht vermeidbare Bildung von Hydroxylionen bei der Sauerstoffreduktion kommt bei der Behandlung von Wasser, die Bestandteile enthalten, welche im Basischen schwerlösliche Niederschläge und Ablagerungen bilden, zu Ablagerungen auf der Katode. Ein Beispiel ist die Kalkablagerung auf der Katode bei der elektrochemischen Desinfektion von Härtebildner enthaltendem Wasser. Üblicherweise wird der Kalk durch periodischen Polaritätswechsel entfernt. In einer vorteilhaften Ausführung besteht eine Einheit der Vorrichtung zur elektrolytischen Wasserdesinfektion unter Vermeidung katodischer Wasserstoffentwicklung aus einer Anode, die zwischen 2 Gasdiffusionselektroden positioniert wird, wobei nur eine Gasdiffusionselektrode als Katode geschaltet ist, die zweite jedoch als Hilfsanode geschaltet wird.

Zweckmäßig findet zwischen den beiden Gasdiffusionselektroden ein periodischer Polaritätswechsel statt, um auf der Katode gebildeten Ablagerungen anodisch wiederaufzulösen. Die zwischen den Gasdiffusionselektroden befindliche Anode arbeitet dagegen als Permanentanode.

In einer weiteren Ausführung entsteht eine modulare an eine gegebene Problemstellung anpassbare Vorrichtung dadurch, dass mehrere aus 2 Gasdiffusionselektroden und einer dazwischen befindlichen Anode bestehende Einheiten parallel oder in Reihe hintereinander geschaltet werden.

Die folgenden Beispiele fallen nicht unter den Schutzampfang der Ansprüche.

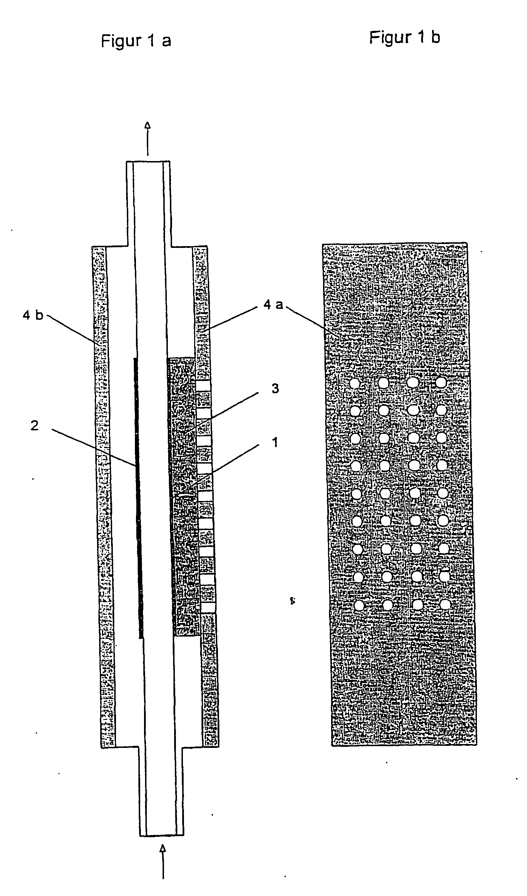

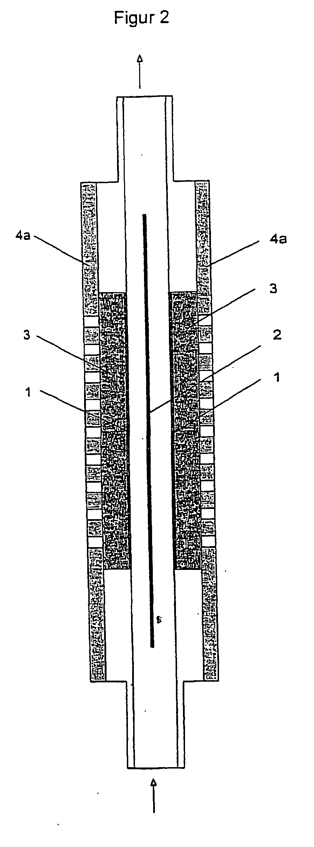

In Fig. 1 und 2 sind mögliche Ausführungen zum Aufbau einer Vorrichtung zur elektrolytischen Wasserdesinfektion durch anodisch erzeugte Desinfizienzien ohne katodische Wasserstoffentwicklung schematisch dargestellt,

1. Fig. 1a ist eine Schnittdarstellung über eine vollständige Elektrolysezelle. Die Zelle folgt dem Prinzip einer Rahmendruckzelle. Zwischen zwei Andruckplatten (4a und 4b) sind eine Anode (2) und eine Gasdiffusionselektrode als Katode (1) fixiert. Die Andruckplatte 4b (Fig. 1b) ist dabei über der Fläche der Gasdiffusionselektrode gelocht. Die Gasdiffusionselektrode wird über die gesamte Fläche durch eine poröse Stützplatte (3) mechanisch stabilisiert. Als Stützmaterial wurde ein poröses Filtermaterial (40 % Porosität) aus reinem Polyethylen eingesetzt. An die Gasdiffusionselektrode ist uneingeschränkter Luftzutritt möglich. Die Zelle wird von unten nach oben von Wasser durchströmt.

a) Für die elektrolytische Erzeugung von Freiem Chlor als Desinfektionsmittel wird eine iridiumoxidbeschichtete Titanelektrode der Fa. Metakem GmbH Usingen als Anode eingesetzt. Die Gasdiffusionselektrode besteht aus einem Metalldrahtnetz oder -streckmetall (z.B.: Ni, Fe, Ti) und einer Graphitschicht mit Katalysatoren (z. B.: Mn, Pt), die die Wasserstoffperoxydproduktion unterbinden.

Es wurden Versuche mit verschiedenen Gasdiffusionselektroden und Variation des Chloridgehaltes des Wassers und der Stromdichte durchgeführt. Bei Einsatz der Gasdiffusionselektrode MOC (mit PTFE auf versilbertem Nickelnetz; Fa. Gaskatel GmbH Kassel) sind bei einem Chloridgehalt des Wassers von 60 mg/l mit $j=18$ mA/cm$^2$ 33 mg/Ah Freies Chlor erreichbar (weitere Werte in Tab.1).

| Chloridkonzentration im Wasser | Produktion Freies Chlor | |
|---|---|---|
| | Stromdichte j=18 mA/cm$^2$ | Stromdichte j=36 mA/cm$^2$ |
| 60 mg/l | 33 mg/Ah | 35 mg/Ah |
| 240 mg/l | 160 mg/Ah | 250 mg/Ah |

Der pH-Wert und die elektrische Leitfähigkeit des behandelten Wassers bleiben unverändert.

b) Für die anodische Erzeugung von Wasserstoffperoxyd als Desinfektionsmittel werden als Anode bordotierte Diamantelektroden (Fraunhofer Institut Schicht- und Oberflächentechnik Braunschweig) verwendet. Als Gasdiffusionselektrode werden Sorten mit wasserstoffperoxydaktiven Graphitarten eingesetzt. Über die Auswahl der Graphitarten und die Stromdichte sind verschiedene Konzentrationen Wasserstoffperoxyd erreichbar.

| Pos. | Bezeichnung der Graphitarten | Wasserstoffperoxydproduktion (mg/Ah) |
|---|---|---|
| 1 | Graphit KS 75 | 112 |
| 2 | Graphit MCITB | 25 |
| 3 | Graphit PC 006 | 205 |

2. Fig. 2 ist eine Schnittdarstellung einer Zelle zur elektrochemischen Wasserdesinfektion und -behandlung, in der ein periodischer Polaritätswechsel zwischen den Gasdiffusionseiektroden möglich ist. Die Zelle beruht auf dem Prinzip einer Rahmendruckzelle. Zwischen zwei Gasdiffusionselektroden (1), die über die gesamte Elektrodenfläche mittels einer porösen Stützplatte (3) stabilisiert werden, befindet sich zentriert als Anode (2) eine Iridiumoxidbeschichtete Titanelektrode. Die Anode arbeitet als Permanentanode. Die Gasdiffusionselektrode enthält als Metalldrahtnetz ein iridiummischoxidbeschichtetes Titanstreckmetall. Zwischen den beiden Gasdiffusionselektroden findet ein periodischer Polaritätswechsel statt, so dass eine Gasdiffusionselektrode als Katode, die ändere als Hilfsanode geschaltet wird.

Bei der Anwendung in der elektrolytischen Wasserdesinfektion wird der an der katodisch arbeitenden Gasdiffusionselektrode abgeschiedene Kalk an der als Hilfsanode geschalteten Gasdiffusionselektrode wieder aufgelöst.

## Patentansprüche

1. Verfahren zur elektrolytischen Desinfektion von Trinkwasser durch anodisch erzeugte Desinfizienzien unter Vermeidung katodischer Wasserstoffentwicklung, **dadurch gekennzeichnet, dass** als Katode eine Sauerstoffverzehrkatode in Form einer Gasdiffusionselektrode verwendet wird, die mit Sauerstoff oder mit einem Sauerstoff enthaltenden Gas in Kontakt gebracht wird und die eine Wasserstoffperoxidbildung unterbindende Katalysatoren aufweist, und dass als Anode eine bordotierte Diamantelektrode verwendet wird.

2. Verfahren nach Anspruch 1, **dadurch gekennzeichnet, dass** die Gasdiffusionselektrode teilweise mit der Außenluft in Kontakt gebracht wird, wobei sie im Kontaktbereich eine für Sauerstoff durchlässige und für Wasser undurchlässige Membran aufweist.

3. Verfahren nach Anspruch 2, **dadurch gekennzeichnet, dass** eine Membran aus Teflon verwendet wird.

4. Verfahren nach einem der Ansprüche 1 bis 3, **dadurch gekennzeichnet, dass** eine Gasdiffusionselektrode mit einer porösen Kohlenschicht verwendet wird.

5. Verfahren nach Anspruch 4, **dadurch gekennzeichnet, dass** eine mit einem Metalldrahtnetz oder einem Streckmetall überzogene Kohleschicht verwendet wird.

6. Verfahren nach Anspruch 5, **dadurch gekennzeichnet, dass** ein Metalldrahtnetz aus Titan oder einem anderen Ventilmetall verwendet wird.

7. Verfahren nach einem der Ansprüche 4 bis 6, **dadurch gekennzeichnet, dass** zur Verhinderung von Wasserstoffperoxydbildung die Kohleschicht und/oder das Metalldrahtnetz oder Streckmetall mit einem Oxid eines Ele-

**EP 1 326 805 B1**

mentes der Platinmetallgruppe vorzugsweise Iridium- oder Rutheniumoxid beschichtet werden.

8. Verfahren nach einem der Ansprüche 1 bis 7, **dadurch gekennzeichnet, dass** die Gasdiffusionselektrode auf der dem Wasser abgewandten Seite mechanisch gestützt wird.

9. Verfahren nach Anspruch 8, **dadurch gekennzeichnet, dass** als Stütze für die Gasdiffusionselektroden eine solche aus einem porösen Kunststoff oder Metall verwendet wird.

10. Verfahren nach einem der Ansprüche 1 bis 9, **dadurch gekennzeichnet, dass** jeweils eine Anode zwischen zwei Gasdiffusionselektroden positioniert wird, welche wechselweise als Katode und als Hilfsanode geschaltet werden.

11. Verfahren nach Anspruch 10, **dadurch gekennzeichnet, dass** mehrere aus jeweils zwei Gasdiffusionselektroden und einer dazwischen befindlichen Anode bestehende Einheiten parallel oder in Reihe hintereinander geschaltet werden.

**Claims**

1. Process for electrolytic disinfection of drinking water with anodically produced disinfectants without cathodic hydrogen evolution, **characterised in that** an oxygen consuming cathode in the form of a gas diffusion electrode is used as the cathode, the same being brought into contact with oxygen or with an oxygen containing gas and incorporating a catalytic converter preventing hydrogen peroxide formation, and **in that** a boron doped diamond electrode is used as the anode.

2. Process according to Claim 1, **characterised in that** the gas diffusion electrode is brought into partial contact with the surrounding air, whereby the same incorporates an oxygen and water permeable membrane within the contact area.

3. Process according to Claim 2, **characterised in that** a membrane made of Teflon is utilised.

4. Process according to one of the Claims 1 to 3, **characterised in that** a gas diffusion electrode with a porous carbon layer is utilised.

5. Process according to Claim 4, **characterised in that** a carbon layer coated with metal wire mesh or an expandable metal is utilised.

6. Process according to Claim 5, **characterised in that** a metal wire mesh made of titanium or another valve metal is utilised.

7. Process according to one of the Claims 4 to 6, **characterised in that** the carbon layer and/or the metal wire mesh or expandable metal is coated with an oxide of an element of the platinum metal group, preferably iridium or ruthenium oxide, to prevent hydrogen peroxide formation.

8. Process according to one of the Claims 1 to 7, **characterised in that** the gas diffusion electrode is mechanically supported on the side facing away from the water.

9. Process according to Claim 8, **characterised in that** as a support for the gas diffusion electrode such an electrode made of a porous plastic or metal is utilised.

10. Process according to one of the Claims 1 to 9, **characterised in that** one anode each is positioned between two gas diffusion electrodes, which is alternately switched as a cathode and as an auxiliary anode.

11. Process according to Claim 10, **characterised in that** several units consisting of two gas diffusion electrodes each and one anode positioned between the same are switched in parallel or in sequence behind each other.

**Revendications**

1. Procédé de désinfection électrolytique d'eau potable par l'intermédiaire de désinfectants produits au niveau de l'anode, en évitant la formation cathodique d'hydrogène,
   **caractérisé en ce que**, comme cathode, on utilise une cathode consommable à oxygène se présentant sous la forme d'une électrode à diffusion gazeuse, laquelle est mise en contact avec de l'oxygène ou un gaz contenant de l'oxygène, et comporte des catalyseurs empêchant la formation de peroxyde d'hydrogène, et **en ce que**, comme anode, on utilise une électrode en diamant dopé au bore.

2. Procédé selon la revendication 1, **caractérisé en ce que** l'électrode à diffusion gazeuse est en partie mise en contact avec l'air extérieur, moyennant quoi elle comporte, dans la zone de contact, une membrane perméable à l'oxygène et imperméable à l'eau.

3. Procédé selon la revendication 2, **caractérisé en ce qu'**on utilise une membrane réalisée en Téflon.

4. Procédé selon l'une quelconque des revendications 1 à 3, **caractérisé en ce qu'**on utilise une électrode à diffusion gazeuse dotée d'une couche de charbon poreuse.

5. Procédé selon la revendication 4, **caractérisé en ce qu'**on utilise une couche de charbon revêtue d'un réseau de filaments métalliques ou d'un métal déployé.

6. Procédé selon la revendication 5, **caractérisé en ce qu'**on utilise un réseau de filaments métalliques réalisé en titane ou dans un autre métal de soupape.

7. Procédé selon l'une quelconque des revendications 4 à 6, **caractérisé en ce que**, pour empêcher la formation de peroxyde d'hydrogène, la couche de charbon et / ou le réseau de filaments métalliques ou le métal déployé sont revêtus d'un oxyde d'un élément du groupe des platines métalliques, de préférence l'oxyde d' iridium ou de ruthénium.

8. Procédé selon l'une quelconque des revendications 1 à 7, **caractérisé en ce que** l'électrode à diffusion gazeuse est supportée, du côté opposé à l'eau, de façon mécanique.

9. Procédé selon la revendication 8, **caractérisé en ce que**, comme support pour les électrodes à diffusion gazeuse, on utilise une électrode de ce type réalisée dans une matière plastique poreuse ou un métal.

10. Procédé selon l'une quelconque des revendications 1 à 9, **caractérisé en ce que** respectivement une anode est disposée entre deux électrodes à diffusion gazeuse, qui sont alternativement montées en tant que cathode et en tant qu'anode auxiliaire.

11. Procédé selon la revendication 10, **caractérisé en ce que** plusieurs unités constituées respectivement de deux électrodes à diffusion gazeuse et d'une anode se trouvant entre les deux sont montées l'une derrière l'autre, en parallèle ou en série.

Figur 1 a                    Figur 1 b

Figur 2